# EUROPEAN PATENT APPLICATION

(11) **EP 4 503 704 A1**
(43) Date of publication of application: **05.02.2025**
(21) Application number: 23778268.5
(22) Date of filing: 29.03.2023
(51) Int. Cl.: H04W 24/02

(54) **PROCESSING METHOD AND APPARATUS FOR PHYSICAL LAYER OPERATION, AND TERMINAL**

(30) Priority: 30.03.2022 CN 202210332752
(71) Applicant: VIVO MOBILE COMMUNICATION CO., LTD., Dongguan, Guangdong 523863 (CN)
(72) Inventor: WANG, Lihui, Dongguan, Guangdong 523863 (CN)
(74) Representative: Lavoix
(86) International application number: PCT/CN2023/084581
(87) International publication number: WO 2023/185903

(57) **Abstract**

Disclosed in the present application are a processing method and apparatus for a physical layer operation, and a terminal. The method comprises: when a first downlink BWP comprises a first SSB, executing a physical layer operation on the basis of the first SSB, wherein the first SSB comprises a non-cell defining SSB, and the physical layer operation comprises at least one of the following: determining an EPRE of a CSI-RS; determining a related operation for a PDCCH candidate resource; changing, by means of SFI, a transmission direction corresponding to a flexible slot; determining an effective PRACH occasion; scheduling repeat transmission by means of an RAR UL grant or first DCI; determining a correspondence between an HARQ process number and a plurality of PUSCH transmissions; determining a first condition for triggering, in a first slot, the postponing of the transmission of SPS HARQ-ACK; determining a second condition for postponing the SPS HARQ-ACK to a second time slot for transmission; and evaluating the radio link quality or evaluating the link recovery quality during an indication period.

## Description

### CROSS-REFERENCE TO RELATED APPLICATIONS

This application claims priority to Chinese Patent Application No. 202210332752.2, filed in China on March 30, 2022, which is incorporated herein by reference in its entirety.

### TECHNICAL FIELD

This application pertains to the field of communication technologies, and specifically relates to a method and apparatus for processing a physical layer operation, and a terminal.

### BACKGROUND

Non-cell defining (Non Cell Defining, NCD) synchronization signal/physical broadcast channel signal blocks (Synchronization Signal and PBCH block, SSB) are introduced in related arts. From the perspective of terminals, in a case that a current activated/active (active) bandwidth part (Bandwidth Part, BWP) does not include a cell defining SSB (Cell Defining SSB, CD-SSB), mandatory CD-SSB based functions that existing terminals must support, such as radio link monitoring (Radio Link Monitoring, RLM), beam failure detection (Beam Failure Detection, BFD), or radio resource management (Radio Resource Management, RRM) can be implemented based on NCD-SSB. However, it is not yet specified which physical layer behavior of terminals is completed based on NCD-SSB.

### SUMMARY

Embodiments of this application provide a method and apparatus for processing a physical layer operation, and a terminal, which can solve the problem that which physical layer behavior of the terminal is completed based on NCD-SSB is not specified.

According to a first aspect, a method for processing a physical layer operation is provided, including:
in a case that a first downlink bandwidth part BWP includes a first synchronization signal/physical broadcast channel signal block SSB, performing, by a terminal, a physical layer operation based on the first SSB, where the first SSB includes a non-cell defining SSB; where
the physical layer operation includes at least one of the following:
   determining energy per resource element EPRE of a downlink channel state information reference signal CSI-RS;
   determining a related operation for a physical downlink control channel PDCCH candidate resource;
   changing, by using a dynamic slot format indicator SFI, a transmission direction corresponding to a flexible slot;
   determining a valid physical random access channel PRACH occasion or physical uplink shared channel PUSCH occasion;
   scheduling a repetition through a random access response uplink grant RAR UL grant or first downlink control information DCI, where the first DCI is DCI scrambled by a temporary cell radio network temporary identifier TC-RNTI;
   determining correspondences between hybrid automatic repeat request HARQ process numbers and multiple scheduled PUSCH transmissions;
   determining a first condition for triggering a delayed semi-persistent scheduling hybrid automatic repeat request acknowledgement SPS HARQ-ACK transmission in a first slot;
   determining a second condition for delaying an SPS HARQ-ACK transmission to a second slot; and
   evaluating radio link quality or link recovery quality in each indication period.

According to a second aspect, an apparatus for processing a physical layer operation is provided, including:
a first processing module, configured to: in a case that a first downlink bandwidth part BWP includes a first synchronization signal/physical broadcast channel signal block SSB, perform a physical layer operation based on the first SSB, where the first SSB includes a non-cell defining SSB; where
the physical layer operation includes at least one of the following:
   determining energy per resource element EPRE of a downlink channel state information reference signal CSI-RS;
   determining a related operation for a physical downlink control channel PDCCH candidate resource;
   changing, by using a dynamic slot format indicator SFI, a transmission direction corresponding to a flexible slot;
   determining a valid physical random access channel PRACH occasion or physical uplink shared channel PUSCH occasion;
   scheduling a repetition through a random access response uplink grant RAR UL grant or first downlink control information DCI, where the first DCI is DCI scrambled by a temporary cell radio network temporary identifier TC-RNTI;
   determining correspondences between hybrid automatic repeat request HARQ process numbers and multiple scheduled PUSCH transmissions;
   determining a first condition for triggering a delayed semi-persistent scheduling hybrid automatic repeat request acknowledgement SPS HARQ-ACK transmission in a first slot;
   determining a second condition for delaying an SPS HARQ-ACK transmission to a second slot; and
   evaluating radio link quality or link recovery quality in each indication period.

According to a third aspect, a terminal is provided. The terminal includes a processor and a memory. The memory stores a program or an instruction executable on the processor. When the program or an instruction is executed by the processor, the steps of the method according to the first aspect are implemented.

According to a fourth aspect, a terminal is provided, including a processor and a communication interface. The processor is configured to: in a case that a first downlink bandwidth part BWP includes a first synchronization signal/physical broadcast channel signal block SSB, perform a physical layer operation based on the first SSB, where the first SSB includes a non-cell defining SSB; where
the physical layer operation includes at least one of the following:
determining energy per resource element EPRE of a downlink channel state information reference signal CSI-RS;
determining a related operation for a physical downlink control channel PDCCH candidate resource;
changing, by using a dynamic slot format indicator SFI, a transmission direction corresponding to a flexible slot;
determining a valid physical random access channel PRACH occasion or physical uplink shared channel PUSCH occasion;
scheduling a repetition through a random access response uplink grant RAR UL grant or first downlink control information DCI, where the first DCI is DCI scrambled by a temporary cell radio network temporary identifier TC-RNTI;
determining correspondences between hybrid automatic repeat request HARQ process numbers and multiple scheduled PUSCH transmissions;
determining a first condition for triggering a delayed semi-persistent scheduling hybrid automatic repeat request acknowledgement SPS HARQ-ACK transmission in a first slot;
determining a second condition for delaying an SPS HARQ-ACK transmission to a second slot; and
evaluating radio link quality or link recovery quality in each indication period.

According to a fifth aspect, a readable storage medium is provided, where the readable storage medium stores a program or an instruction, and when the program or an instruction is executed by a processor, the steps of the method according to the first aspect are implemented.

According to a sixth aspect, a chip is provided. The chip includes a processor and a communication interface. The communication interface is coupled to the processor, and the processor is configured to run a program or an instruction to implement the method according to the first aspect.

According to a seventh aspect, a computer program/program product is provided. The computer program/program product is stored in a storage medium. The computer program/program product is executed by at least one processor to implement the steps of the method according to the first aspect.

According to an eighth aspect, a communication device is provided and configured to implement the steps of the method according to the first aspect.

In the embodiments of this application, in a case that the first downlink bandwidth part BWP includes the first SSB, the terminal performs the physical layer operation based on the first SSB, where the first SSB includes the non-cell defining SSB. The physical layer operation includes at least one of the following: determining the EPRE of the downlink CSI-RS; determining the related operation for the PDCCH candidate resource; changing, by using the SFI, the transmission direction corresponding to the flexible slot; determining the valid PRACH occasion; scheduling the repetition through the RAR UL grant or first DCI; determining the correspondences between the HARQ process numbers and the multiple scheduled PUSCH transmissions; determining the first condition for triggering the delayed SPS HARQ-ACK transmission in the first slot; determining the second condition for delaying the SPS HARQ-ACK transmission to the second slot; and evaluating radio link quality or link recovery quality in each indication period. In the embodiments of this application, it is specified that the above physical layer behavior is completed based on the first SSB containing the non-cell defining SSB, thereby enabling a network side to correspondingly configure the first SSB based on the physical layer behavior.

### BRIEF DESCRIPTION OF DRAWINGS

FIG. 1 is a structural diagram of a communication system to which the embodiments of this application can be applied;
FIG. 2 is a schematic flowchart of a method for processing a physical layer operation according to an embodiment of this application;
FIG. 3 is a schematic diagram illustrating the relationship between BWPs allocated to a terminal according to an embodiment of this application;
FIG. 4 is a modular diagram of an apparatus for processing a physical layer operation according to an embodiment of this application;
FIG. 5 is a structural block diagram of a communication device according to an embodiment of this application; and
FIG. 6 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

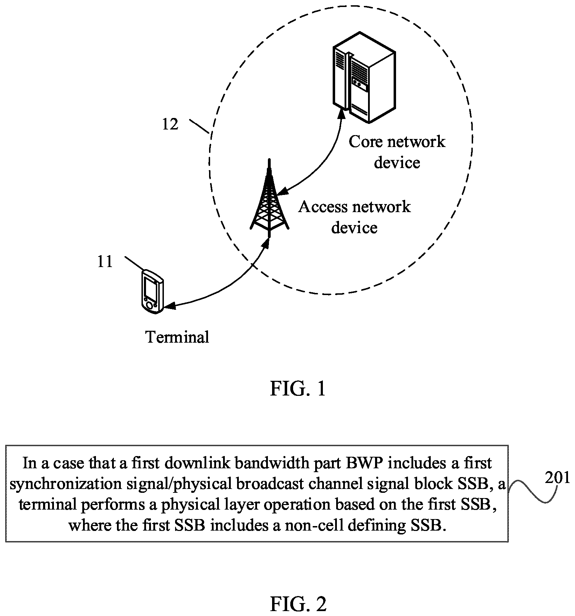

FIG. 1 is a block diagram of a wireless communication system to which the embodiments of this application can be applied. The wireless communication system includes a terminal 11 and a network-side device 12. The terminal 11 may be a terminal-side device, such as a mobile phone, a tablet personal computer (Tablet Personal Computer), a laptop computer (Laptop Computer,) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to a specific type in the embodiments of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Network, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that only a core network device in an NR system is used as an example in the embodiments of this application and the core network device is not limited to a specific type.

The following describes in detail the method for processing a physical layer operation provided in the embodiments of this application by using some embodiments and application scenarios thereof with reference to the accompanying drawings.

As shown in FIG. 2, an embodiment of this application provides a method for processing a physical layer operation including the following step.

Step 201: In a case that a first downlink bandwidth part BWP includes a first synchronization signal/physical broadcast channel signal block SSB, a terminal performs a physical layer operation based on the first SSB, where the first SSB includes a non-cell defining SSB.

The physical layer operation includes at least one of the following:
option 1: determining energy per resource element (Energy per resource element, EPRE) of a downlink channel state information reference signal (Channel State Information Reference Signal, CSI-RS);
option 2: determining a related operation for a physical downlink control channel (Physical Downlink Control Channel, PDCCH) candidate resource;
option 3: changing, by using a dynamic slot format indicator (Slot Format Indicator, SFI), a transmission direction corresponding to a flexible slot;
option 4: determining a valid physical random access channel (Physical Random Access Channel, PRACH) occasion or physical uplink shared channel (Physical Uplink Shared Channel, PUSCH) occasion;
option 5: scheduling a repetition through a random access response (Random Access Response, RAR) uplink grant (UpLink grant, UL grant) or first downlink control information (Downlink Control Information, DCI), where the first DCI is DCI scrambled by a temporary cell radio network temporary identifier (Temporary Cell Radio Network Temporary Identifier, TC-RNTI);
option 6: determining correspondences between hybrid automatic repeat request (Hybrid Automatic Repeat Request, HARQ) process numbers and multiple scheduled physical uplink shared channel (Physical Uplink Shared Channel, PUSCH) transmissions;
option 7: determining a first condition for triggering a delayed semi-persistent scheduling (Semi-Persistent Scheduling, SPS) hybrid automatic repeat request acknowledgement (Hybrid Automatic Repeat Request Acknowledgement, HARQ-ACK) transmission in a first slot;
option 8: determining a second condition for delaying an SPS HARQ-ACK transmission to a second slot; and
option 9: evaluating radio link quality or link recovery quality in each indication period.

The terminal in this embodiment of this application can be a reduced capability terminal (Reduced Capability, RedCap device/UE, or terminal with reduced capability), or a traditional terminal, that is, a non-reduced capability terminal.

It should be noted that the method in this embodiment of this application is also applicable to release-18 (release-18, Rel-18) flexible/full duplex (flexible/full duplex) and multiple TRP (multiple TRP) scenarios.

In this embodiment of this application, in a case that the first downlink bandwidth part (Bandwidth Part, BWP) includes the first SSB, the terminal performs the physical layer operation based on the first SSB, where the first SSB includes the non-cell defining SSB. The physical layer operation includes at least one of the following: determining the EPRE of the downlink channel state information reference signal (CSI Reference Signal, CSI-RS); determining the related operation for the PDCCH candidate resource; changing, by using the SFI, the transmission direction corresponding to the flexible slot; determining the valid PRACH occasion; scheduling the repetition through the RAR UL grant or first DCI; determining the correspondences between the HARQ process numbers and the multiple scheduled PUSCH transmissions; determining the first condition for triggering the delayed SPS HARQ-ACK transmission in the first slot; determining the second condition for delaying the SPS HARQ-ACK transmission to the second slot; and evaluating radio link quality or link recovery quality in each indication period. In this embodiment of this application, it is specified that the above physical layer behavior is completed based on the first SSB containing the non-cell defining SSB, thereby enabling a network side to correspondingly configure the first SSB based on the physical layer behavior.

Optionally, for option 1, the determining, by a terminal, energy per resource element EPRE of a downlink CSI-RS based on a first SSB includes:
determining the EPRE based on a power offset parameter of the CSI-RS relative to a target first SSB and a synchronization signal-PBCH block power (SS-PBCH-Block Power) configured by a higher layer.

Specifically, adding or subtracting the value corresponding to the power offset parameter to or from the synchronization signal-PBCH block power to obtain the EPRE.

Optionally, the target first SSB includes one of the following:
first SSB contained in the first BWP;
first SSB configured or specified by a network; and
first SSB having a same target parameter as a second SSB; where
the target parameter includes at least one of synchronization signal-PBCH block power (SS-PBCH-Block Power) and a physical cell identifier (Physical Cell Identifier, PCI), and the second SSB includes a cell defining SSB (Cell Defining SSB, CD-SSB).

Optionally, for option 2, the determining, by a terminal, a related operation for a PDCCH candidate resource based on a first SSB includes:
performing, by the terminal, a first operation in a case that a resource element corresponding to the PDCCH candidate resource overlaps with a resource element corresponding to the first SSB, where the first operation includes at least one of the following:
skipping monitoring the PDCCH candidate resource;
monitoring the PDCCH candidate resource or not receiving the first SSB; and
determining a network configuration or scheduling error.

The above PDCCH candidate resource includes a PDCCH potential search space. If at least one resource element of the PDCCH candidate resource of the terminal overlaps with at least one RE of the first SSB, the terminal performs the above first operation.

Herein, in a case that a resource element corresponding to the PDCCH candidate resource overlaps with a resource element corresponding to the first SSB, skipping monitoring the PDCCH candidate resource ensures the reception of the SSB, helping the terminal to accurately track timing and measure channel quality through the SSB. Additionally, skipping monitoring the PDCCH candidate resource does not limit network scheduling, thereby allowing for resource contention between a PDCCH candidate resource scheduled by a network and the first SSB.

Herein, in a case that a resource element corresponding to the PDCCH candidate resource overlaps with a resource element corresponding to the first SSB, not receiving the first SSB prioritizes PDCCH reception, thereby reducing the loss and delay of data or control signals. Additionally, not receiving the first SSB does not limit network scheduling, thereby allowing for resource contention between a PDCCH candidate resource scheduled by a network and the first SSB.

Optionally, for option 3, the changing, by a terminal based on a first SSB by using a dynamic slot format indicator SFI, a transmission direction corresponding to a flexible slot includes:
in a case that second DCI with a first slot format indicator (Slot Format Indicator, SFI) index field value is detected, dropping, by the terminal, reception of the first SSB, or receiving the first SSB, or determining behavior of the terminal based on terminal implementation, where herein, receiving the first SSB helps the terminal to accurately track timing and measure channel quality through the SSB; and dropping the reception of the first SSB determines the flexibility of the network to change the transmission direction, thereby helping the terminal to save power; or
determining that the terminal does not expect to detect second DCI with a first SFI index field value.

Optionally, the determining that the terminal does not expect to detect second DCI with a first SFI index field value can be understood as follows: the base station cannot send the second DCI with the first SFI index field value to the terminal, or if the base station sends the second DCI with the first SFI index field value to the terminal, behavior of the terminal is unclear.

The first SFI index field value indicates that a transmission direction corresponding to a first symbol is an uplink transmission direction, where the first symbol is at least one of the symbol corresponding to the first SSB.

Herein, for a group of symbols corresponding to the first SSB, the first terminal does not expect to detect DCI format 2_0 (that is, the second DCI) with the first SFI index field value, where any symbol in the group of symbols indicated by the value is for uplink. Alternatively, if the first terminal detects that any symbol in the group of symbols indicated by DCI format 2_0 with the first SFI index field value is for uplink, the first terminal drops the reception of the first SSB, behavior of the terminal depends on terminal implementation, or the first terminal receives the first SSB.

Optionally, for option 4, the determining, by a terminal based on a first SSB, a valid PRACH occasion or physical uplink shared channel PUSCH occasion includes:
determine, as a valid first occasion, a first occasion that is located after a third SSB and/or a fourth SSB and whose interval between the fourth SSB is greater than a first interval, where the first occasion includes at least one of PRACH occasion and PUSCH occasion; where
the third SSB is one first SSB in a slot in which a PRACH or PUSCH is located or a first SSB configured or specified by a network, and the fourth SSB is the first SSB or the fourth SSB is a first SSB configured or specified by a network;
the third SSB is a second SSB in a slot in which a PRACH or PUSCH is located, and the fourth SSB is the first SSB or the fourth SSB is a first SSB configured or specified by a network; or
the third SSB is one first SSB in a slot in which a PRACH or PUSCH is located or a first SSB configured or specified by a network, and the fourth SSB is a second SSB; and
the second SSB is a cell defining SSB.

As an optional implementation, the fourth SSB is the last first SSB in the first slot or a first SSB configured or specified by a network. The first slot is a slot where a first occasion is located, or a slot before a slot where the first occasion is located. For example, the fourth SSB is located in the last few symbols of slot n, and a PRACH occasion is located in the first few symbols of slot n+1. The fourth SSB and the third SSB may be the same SSB or different SSBs.

In this embodiment of this application, the first interval includes M symbols, where M can be protocol-agreed or network-configured.

For option 4, on a symmetric or paired (paired) spectrum, a terminal without full duplex capability determines a valid physical random access channel PRACH occasion; on an asymmetric or unpaired spectrum (unpaired spectrum), a half duplex terminal determines a valid physical random access channel PRACH occasion; and on a flexible spectrum or full duplex spectrum, a half duplex/full duplex or flexible duplex terminal determines a valid physical random access channel PRACH occasion.

As a first implementation of this embodiment of this application, for an asymmetric spectrum, a PRACH occasion (or PRACH resource) is determined as a valid PRACH occasion if the PRACH occasion is not before a third SSB in a slot where a PRACH is located (it can overlap with the third SSB), is after a fourth SSB in the slot where the PRACH is located, and has an interval between the fourth SSB greater than a first interval.

As a second implementation of this embodiment of this application, a PUSCH occasion is determined as a valid PUSCH occasion if the PUSCH occasion is used for two-step random access and scheduling configured grant in a radio resource control (Radio Resource Control, RRC) idle state or non-active state, is not before a third SSB in a slot where a PUSCH is located (it can overlap with the third SSB), is after a fourth SSB in a slot where a PUSCH occasion is located, and has an interval between the fourth SSB greater than a first interval.

Optionally, in this embodiment of this application, before the determining, by the terminal, a valid PRACH occasion based on the first SSB, the method further includes:
performing, by the terminal, a second operation, where the second operation includes at least one of the following:
in a case that an uplink BWP associated with the first downlink BWP is configured with target information or the terminal is in a connected state, determining that the third SSB is the first SSB in the slot in which the PRACH or PUSCH is located and/or determining that the fourth SSB is the first SSB;
in a case that the terminal is in a connected state, determining that at least one of the third SSB and the fourth SSB is the first SSB configured or specified by the network; where
the target information includes at least one of the following:
   dedicated random access channel configuration information;
   common random access channel configuration information;
   beam failure recovery configuration information; and
   physical uplink shared channel configuration information related to two-step random access.

For option 5, the scheduling, by a terminal based on a first SSB, a repetition through a random access response uplink grant RAR UL grant or first downlink control information DCI includes:
performing, by the terminal, a third operation in a case that a resource corresponding to the N-th repetition overlaps with a resource corresponding to the first SSB, where N is a positive integer, and the third operation includes one of the following:
delaying the N-th repetition;
dropping the N-th repetition;
transmitting the N-th repetition; and
determining a network configuration error or network scheduling error; where
the repetition includes a PUSCH repetition or a PUCCH repetition.

For option 6, the determining, by a terminal based on a first SSB, correspondences between HARQ process numbers and multiple scheduled PUSCH transmissions includes:
in a case that the terminal is scheduled with the multiple PUSCH transmissions by third DCI, a HARQ process number indicated by the third DCI corresponding to the 1st PUSCH transmission that does not overlap with a second symbol, where the second symbol includes at least one of the following:
downlink symbol indicated by a time division duplexing uplink-downlink common configuration or a time division duplexing uplink-downlink dedicated configuration; and
symbol corresponding to the first SSB.

Optionally, the method of this embodiment of this application further includes:
determining process numbers of subsequent PUDCH transmissions based on a scheduling order of the subsequent PUSCH transmissions after the 1st PUSCH transmission and a HARQ process number of the 1st PUSCH.

Optionally, the determining process numbers of subsequent PUSCH transmissions based on a scheduling order of the subsequent PUSCH transmissions after the 1st PUSCH transmission and a HARQ process number of the 1st PUSCH includes:
in a case that a symbol corresponding to the subsequent PUSCH transmission does not overlap with the second symbol, determining the process numbers of the subsequent PUDCH transmissions based on the scheduling order of the subsequent PUSCH transmissions and the HARQ process number of the 1st PUSCH.

In this embodiment of this application, when the UE is scheduled with multiple PUSCH transmissions by DCI (the third DCI), a HARQ process number (ID) indicated by the DCI is applicable to the 1st PUSCH that does not overlap with a downlink symbol indicated by the time division duplexing uplink-downlink common configuration (TDD-UL-DL-Configuration Common) or time division duplexing uplink-downlink dedicated configuration (TDD-UL-DL-Configuration Dedicated), or applicable to the 1st PUSCH that does not overlap with any one of a symbol corresponding to the first SSB. Then, for each subsequent PUSCH in the scheduling order, the HARQ process ID is incremented by 1, and a modulo operation of the total number of HARQ process numbers applied to the PUSCH (nrofHARQ-ProcessesForPUSCH) is applied. If at least one of a symbol in which a PUSCH transmission indicated by an index row of a resource allocation table is located in a slot overlaps with a downlink (Downlink, DL) symbol indicated by Tdd-UL-DL-ConfigurationCommon or Tdd-UL-DL-ConfigurationDedicated or overlaps with the symbol in which the first SSB is located, the HARQ process ID will not be incremented for the unsent PUSCH.

For option 7, the first condition includes:
a PUCCH transmitting an SPS HARQ-ACK in the first slot is indicated by a first parameter, and a symbol corresponding to the PUCCH overlaps with a symbol corresponding to the first SSB; where
the first parameter includes at least one of a PUCCH resource list (set) for semi-persistent scheduling HARQ feedback and a PUCCH resource for semi-persistent scheduling HARQ feedback.

In this embodiment of this application, in the first slot, in a case that the PUCCH transmitting the SPS HARQ-ACK is provided by a PUCCH resource list (SPS-PUCCH-AN-List) for semi-persistent scheduling HARQ feedback or a PUCCH resource (n1PUCCH-AN) parameter for semi-persistent scheduling HARQ feedback, and the PUCCH overlaps with the symbol in which the first SSB is located by at least one symbol, the process of delaying the SPS HARQ-ACK transmission is triggered.

For option 8, the second condition includes:
a symbol in the second slot that is indicated by a first parameter and that is corresponding to a PUCCH carrying a delayed SPS HARQ-ACK does not overlap with a symbol corresponding to the first SSB.

In this embodiment of this application, if a second-slot PUCCH that is provided by SPS-PUCCH-AN-List or an n1PUCCH-AN parameter and that carries a delayed SPS HARQ-ACK does not overlap with any symbol in which the first SSB is located, the second slot can be determined as a slot for transmitting the delayed SPS HARQ-ACK.

Optionally, for option 9, the indication period is a maximum value between a shortest period of the first SSB and a preset duration.

The preset duration may specifically be 10 ms.

In this embodiment of this application, the physical layer of the first terminal uses the first SSB to evaluate the radio link quality or link recovery quality once in each indication period, where the first terminal determines the indication period as the maximum value between the shortest period of the radio link monitoring resource, i.e., the first SSB, and 10 milliseconds.

Optionally, in this embodiment of this application, the non-cell defining SSB includes at least one of the following:
SSB configured by terminal-specific signaling (UE-specific RRC signaling);
SSB configured by BWP downlink dedicated (BWP-Downlink Dedicated) signaling, where the SSB configured by BWP downlink dedicated signaling may include an SSB configured by an SSB position in burst (ssb-PositionsInBurst) parameter in the BWP downlink dedicated signaling;
SSB configured by a radio resource control RRC parameter (for example, Non Cell Defining SSB) related to non-cell defining SSB configuration; and
SSB not used to obtain a system information block 1 (System Information Block 1, SIB1) of a current serving cell or an SSB not used to obtain an SIB1 corresponding to a PDCCH configuration of a current serving cell.

In this embodiment of this application, in a case that the first downlink bandwidth part BWP includes the first SSB, the terminal performs the physical layer operation based on the first SSB, where the first SSB includes the non-cell defining SSB. The physical layer operation includes at least one of the following: determining the EPRE of the downlink CSI-RS; determining the related operation for the PDCCH candidate resource; changing, by using the SFI, the transmission direction corresponding to the flexible slot; determining the valid PRACH occasion; scheduling the repetition through the RAR UL grant or first DCI; determining the correspondences between the HARQ process numbers and the multiple scheduled PUSCH transmissions; determining the first condition for triggering the delayed SPS HARQ-ACK transmission in the first slot; determining the second condition for delaying the SPS HARQ-ACK transmission to the second slot; and evaluating radio link quality or link recovery quality in each indication period. In this embodiment of this application, it is specified that the above physical layer behavior is completed based on the first SSB containing the non-cell defining SSB, thereby enabling a network side to correspondingly configure the first SSB based on the physical layer behavior.

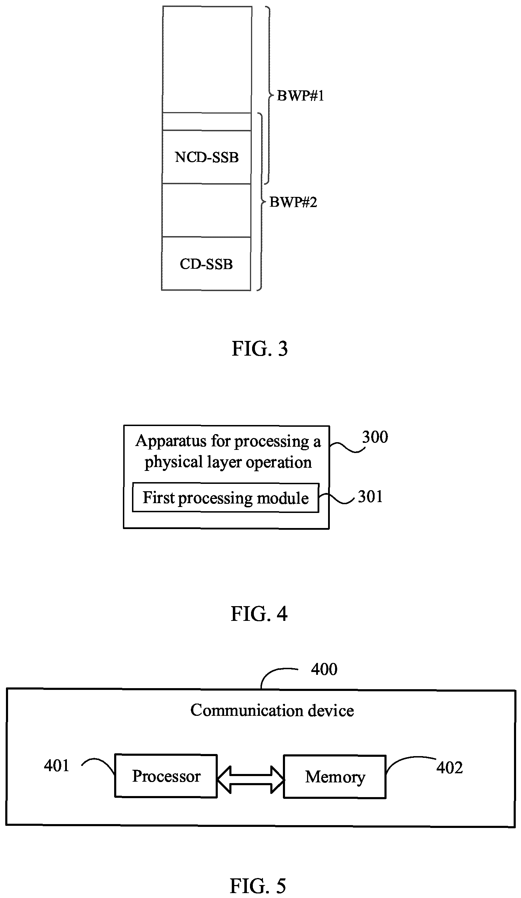

In an embodiment of this application, a current activated (or active) BWP of a first terminal (UE1) is BWP#1, with the first SSB (including NCD-SSB) configured by a network for the first terminal, and a current activated BWP of a second terminal (UE2) is BWP#2, with only a CD-SSB on BWP#2 configured by a network for the second terminal. UE2 can perceive only the CD-SSB, but from the network perspective, BWP#2 actually contains both the CD-SSB and an NCD-SSB, as specifically shown in FIG. 3. For UE1:
in an embodiment of this application, UE1 is half-duplex (Half-Duplex, HD) UE in a paired spectrum. If the HD-UE transmits a PUSCH, PUCCH, or sounding reference signal (Sounding Reference Signal, SRS) based on a higher layer configuration, and indicates through SIB1, ssb-PositionsInBurst in a serving cell common configuration (ServingCellConfigCommon), or NonCellDefiningSSB that there is an SS/PBCH block for the HD-UE in an active BWP, the HD-UE does not transmit:
PUSCH or PUCCH in a case that the last symbol of the PUSCH or PUCCH transmission is not at least *N*_{Tx-Rx} · *T*_{c} before the 1st symbol of a next earliest SS/PBCH block [4, TS 38.211];
PUSCH or PUCCH in a case that the 1st symbol of the PUSCH or PUCCH transmission is not *N*_{Rx-Tx} · *T*_{c} after the last symbol of a previous nearest SS/PBCH block [4, TS 38.211];
SRS in a case a symbol in which the SRS transmission is located is not at least N_{Tx-Rx} · *T*_{c} before the 1st symbol of a next earliest SS/PBCH block; and
SRS in a case that a symbol in which the SRS transmission is located is not *N*_{Rx-Tx} · *T*_{c} after the last symbol of a previous nearest SS/PBCH block.

It should be noted that *N*_{Tx-Rx} · *T*_{c} and N_{Rx-Tx} · T_{c} have the same meaning as existing parameters.

If the HD-UE sends the PRACH, PUSCH, PUCCH, or SRS in a detected DCI format, and indicates through SIB1, ssb-PositionsInBurst in ServingCellConfigCommon, or NonCellDefiningSSB that there is an SS/PBCH block for the HD-UE in a group of symbols (symbol set) of an active BWP, and if the uplink transmission overlaps with any symbol in the symbol set, the HD-UE does not send the PUSCH, PUCCH, or PRACH, and the HD-UE does not send an SRS in the symbol set.

If the HD-UE is to send, in a group of symbols, a PRACH or MsgA PUSCH triggered by a higher layer, and is to receive a PDCCH, PDSCH, CSI-RS, or downlink positioning reference signal (Downlink Positioning Reference Signal, DL PRS), or indicates through SIB1, ssb-PositionsInBurst in ServingCellConfigCommon, or NonCellDefiningSSB that there is an SS/PBCH block in a group of symbols (symbol set) of an active BWP, the HD-UE can choose, based on its implementation, whether to send the PRACH or MsgA PUSCH, or receive the PDSCH, CSI-RS, DLPRS, PDCCH, or SS/PBCH block.

If the HD-UE is to receive a PDCCH, PDSCH, CSI-RS, or DL PRS based on a higher-layer configuration, or indicates through SIB1, ssb-PositionsInBurst in ServingCellConfigCommon, or NonCellDefiningSSB that there is an SS/PBCH block in a group of symbols (symbol set) of an active BWP. In addition, the HD-UE is to transmit a PRACH or MsgA PUSCH transmission triggered by a higher layer, starting from the last or 1st symbol of the symbol set respectively, with a start or end symbol of the PRACH transmission being earlier or later than *N*_{Rx-Tx} · *T*_{c} or N_{Tx-Rx} · *T*_{c}. The HD-UE can choose, based on its implementation, to send the PRACH or MsgA PUSCH, or receive the PDSCH, CSI-RS, DL PRS, PDCCH, or SS/PBCH block.

In an embodiment of this application, the PDCCH candidate can be monitored by the UE in the following methods:
Method 1: For the UE to monitor the PDCCH candidate, if the UE:
   has received ssb-PositionsInBurst of a serving cell, and
   does not monitor a PDCCH candidate in a Type0-PDCCH CSS set; and
   at least one RE used for the PDCCH candidate overlaps with at least one of an RE in which a candidate SS/PBCH block corresponding to a SS/PBCH block index provided by ssb-PositionsInBurst is located, the UE does not need to monitor the PDCCH candidate.
Method 2: For the UE to monitor the PDCCH candidate, if the UE:
   has received ssb-PositionsInBurst in ServingCellConfigCommon of a serving cell and/or NonCellDefiningSSB, and
   does not monitor a PDCCH candidate in a Type0-PDCCH CSS set; and
   at least one RE for the PDCCH candidate overlaps with at least one of an RE in which a candidate SS/PBCH block corresponding to an SS/PBCH block index, where the SS/PBCH block index is provided by ssb-PositionsInBurst in ServingCellConfigCommon and/or NonCellDefiningSSB (if this parameter is provided), the UE does not need to monitor the PDCCH candidate.

In an embodiment of this application, for a group of symbols in a slot corresponding to an SS/PBCH block, a candidate SS/PBCH block index corresponds to an SS/PBCH block index indicated to the UE through ssb-PositionsInBurst in SIB1, ssb-PositionsInBurst in ServingCellConfigCommon, or NonCellDefiningSSB. The UE does not expect to detect DCI format 2_0 with an SFI-index field value, where the value indicates that a group of symbols in the slot is for uplink.

In an embodiment of this application, a candidate SS/PBCH block index of an SS/PBCH block corresponds to an SS/PBCH block index provided by ssb-PositionsInBurst in SIB1 or ServingCellConfigCommon, or is provided by NonCellDefiningSSB. For details, reference may be made to the description in a related protocol.

In an embodiment of this application, if a PUSCH occasion does not overlap in time and frequency with any valid PRACH occasion related to the Type-1 random access procedure or Type-2 random access procedure, it is valid. Additionally, for an unpaired spectrum and an SS/PBCH block with an index provided by ssb-PositionsInBurst in SIB1, ServingCellConfigCommon, or NonCellDefiningSSB, reference may be made to the description in a related protocol.

In an embodiment of this application, an SS/PBCH block symbol is a symbol for an SS/PBCH block with a candidate SS/PBCH block index, corresponding to an SS/PBCH block index indicated to the UE through ssb-PositionsInBurst in SIB1 or ssb-PositionsInBurst in ServingCellConfigCommon, or an SS/PBCH block index indicated to the UE through NonCellDefiningSSB. For details, reference may be made to the description in a related protocol.

The method for processing a physical layer operation provided in this embodiment of this application can be executed by an apparatus for processing a physical layer operation. In this embodiment of this application, the apparatus for processing a physical layer operation executing the method for processing a physical layer operation is used as an example to describe the apparatus for processing a physical layer operation provided in this embodiment of this application.

As shown in FIG. 4, an embodiment of this application further provides an apparatus 300 for processing a physical layer operation including:
a first processing module 301, configured to: in a case that a first downlink bandwidth part BWP includes a first synchronization signal/physical broadcast channel signal block SSB, perform a physical layer operation based on the first SSB, where the first SSB includes a non-cell defining SSB; where
the physical layer operation includes at least one of the following:
   determining energy per resource element EPRE of a downlink channel state information reference signal CSI-RS;
   determining a related operation for a physical downlink control channel PDCCH candidate resource;
   changing, by using a dynamic slot format indicator SFI, a transmission direction corresponding to a flexible slot;
   determining a valid physical random access channel PRACH occasion or physical uplink shared channel PUSCH occasion;
   scheduling a repetition through a random access response uplink grant RAR UL grant or first downlink control information DCI, where the first DCI is DCI scrambled by a temporary cell radio network temporary identifier TC-RNTI;
   determining correspondences between hybrid automatic repeat request HARQ process numbers and multiple scheduled PUSCH transmissions;
   determining a first condition for triggering a delayed semi-persistent scheduling hybrid automatic repeat request acknowledgement SPS HARQ-ACK transmission in a first slot;
   determining a second condition for delaying an SPS HARQ-ACK transmission to a second slot; and
   evaluating radio link quality or link recovery quality in each indication period.

Optionally, the first processing module is configured to determine the EPRE based on a power offset parameter of the CSI-RS relative to a target first SSB and a synchronization signal-PBCH block power configured by a higher layer.

Optionally, the target first SSB includes one of the following:
first SSB contained in the first BWP;
first SSB configured or specified by a network; and
first SSB having a same target parameter as a second SSB; where
the target parameter includes at least one of synchronization signal-PBCH block power and a physical cell identifier PCI, and the second SSB includes a cell defining SSB.

Optionally, the first processing module is configured to perform a first operation in a case that a resource element corresponding to the PDCCH candidate resource overlaps with a resource element corresponding to the first SSB, where the first operation includes at least one of the following:
skipping monitoring the PDCCH candidate resource;
monitoring the PDCCH candidate resource or not receiving the first SSB; and
determining a network configuration or scheduling error.

Optionally, the first processing module is configured to:
in a case that second DCI with a first SFI index field value is detected, drop, by the terminal, reception of the first SSB, or receive the first SSB, or determine behavior of the terminal based on terminal implementation; or
determine that the terminal does not expect to detect second DCI with a first SFI index field value; where
the first SFI index field value indicates that a transmission direction corresponding to a first symbol is an uplink transmission direction, and the first symbol is at least one of a symbol corresponding to the first SSB.

Optionally, the first processing module is configured to:
determine, as a valid first occasion, a first occasion that is located after a third SSB and/or a fourth SSB and whose interval between the fourth SSB is greater than a first interval, where the first occasion includes at least one of PRACH occasion and PUSCH occasion; where
the third SSB is one first SSB in a slot in which a PRACH or PUSCH is located or a first SSB configured or specified by a network, and the fourth SSB is the first SSB or the fourth SSB is a first SSB configured or specified by a network;
the third SSB is a second SSB in a slot in which a PRACH or PUSCH is located, and the fourth SSB is the first SSB or the fourth SSB is a first SSB configured or specified by a network; or
the third SSB is one first SSB in a slot in which a PRACH or PUSCH is located or a first SSB configured or specified by a network, and the fourth SSB is a second SSB; and
the second SSB is a cell defining SSB.

Optionally, the first processing module is configured to perform a second operation, where the second operation includes at least one of the following:
in a case that an uplink BWP associated with the first downlink BWP is configured with target information or the terminal is in a connected state, determining that the third SSB is the first SSB in the slot in which the PRACH or PUSCH is located and/or determining that the fourth SSB is the first SSB; and
in a case that the terminal is in a connected state, determining that at least one of the third SSB and the fourth SSB is the first SSB configured or specified by the network; where
the target information includes at least one of the following:
   dedicated random access channel configuration information;
   common random access channel configuration information;
   beam failure recovery configuration information; and
   physical uplink shared channel configuration information related to two-step random access.

Optionally, the first processing module is configured to perform a third operation in a case that a resource corresponding to the N-th repetition overlaps with a resource corresponding to the first SSB, where N is a positive integer, and the third operation includes one of the following:
delaying the N-th repetition;
dropping the N-th repetition;
transmitting the N-th repetition; and
determining a network configuration error or network scheduling error; where
the repetition includes a PUSCH repetition or a PUCCH repetition.

Optionally, the first processing module is configured to: in a case that the terminal is scheduled with the multiple PUSCH transmissions by third DCI, a HARQ process number indicated by the third DCI corresponds to the 1st PUSCH transmission that does not overlap with a second symbol, where the second symbol includes at least one of the following:
downlink symbol indicated by a time division duplexing uplink-downlink common configuration or a time division duplexing uplink-downlink dedicated configuration; and
symbol corresponding to the first SSB.

Optionally, the apparatus in this embodiment of this application further includes:
a second processing module configured to: determine process numbers of subsequent PUDCH transmissions based on a scheduling order of the subsequent PUSCH transmissions after the 1st PUSCH transmission and a HARQ process number of the 1st PUSCH.

Optionally, the first processing module is configured to: in a case that a symbol corresponding to the subsequent PUSCH transmission does not overlap with the second symbol, determine the process numbers of the subsequent PUDCH transmissions based on the scheduling order of the subsequent PUSCH transmissions and the HARQ process number of the 1st PUSCH.

Optionally, the first condition includes:
a PUCCH transmitting an SPS HARQ-ACK in the first slot is indicated by a first parameter, and a symbol corresponding to the PUCCH overlaps with a symbol corresponding to the first SSB, where
the first parameter includes at least one of SPS-PUCCH-AN-List and n1PUCCH-AN.

Optionally, the second condition includes:
a symbol in the second slot that is indicated by a first parameter and that is corresponding to a PUCCH carrying a delayed SPS HARQ-ACK does not overlap with a symbol corresponding to the first SSB; where
the first parameter includes at least one of SPS-PUCCH-AN-List and n1PUCCH-AN.

Optionally, the indication period is a maximum value between a shortest period of the first SSB and a preset duration.

Optionally, the non-cell defining SSB includes at least one of the following:
SSB configured by terminal-specific signaling;
SSB configured by BWP downlink dedicated signaling;
SSB configured by a radio resource control RRC parameter related to a non-cell defining SSB configuration; and
SSB not used to obtain a system information block SIB1 of a current serving cell or an SSB not used to obtain an SIB1 corresponding to a PDCCH configuration of a current serving cell.

In this embodiment of this application, in a case that the first downlink bandwidth part BWP includes the first SSB, the physical layer operation is performed based on the first SSB, where the first SSB includes the non-cell defining SSB. The physical layer operation includes at least one of the following: determining the EPRE of the downlink CSI-RS; determining the related operation for the PDCCH candidate resource; changing, by using the SFI, the transmission direction corresponding to the flexible slot; determining the valid PRACH occasion; scheduling the repetition through the RAR UL grant or first DCI; determining the correspondences between the HARQ process numbers and the multiple scheduled PUSCH transmissions; determining the first condition for triggering the delayed SPS HARQ-ACK transmission in the first slot; determining the second condition for delaying the SPS HARQ-ACK transmission to the second slot; and evaluating radio link quality or link recovery quality in each indication period. In this embodiment of this application, it is specified that the above physical layer behavior is completed based on the first SSB containing the non-cell defining SSB, thereby enabling a network side to correspondingly configure the first SSB based on the physical layer behavior.

The apparatus for processing a physical layer operation in this embodiment of this application may be an electronic device, for example, an electronic device having an operating system, or may be a component of an electronic device, for example, an integrated circuit or a chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The apparatus for processing a physical layer operation provided in this embodiment of this application is capable of implementing the processes implemented in the method embodiment of FIG. 2, with the same technical effects achieved. To avoid repetition, details are not described herein again.

Optionally, as shown in FIG. 5, an embodiment of this application further provides a communication device 400 including a processor 401 and a memory 402. The memory 402 stores a program or an instruction capable of running on the processor 401. For example, in a case that the communication device 400 is a terminal, when the program or the instruction is executed by the processor 401, the steps of the foregoing embodiments of the method for processing a physical layer operation are implemented, with the same technical effects achieved. To avoid repetition, details are not described herein again.

An embodiment of this application further provides a terminal including a processor and a communication interface. The processor is configured to: in a case that a first downlink bandwidth part BWP includes a first synchronization signal/physical broadcast channel signal block SSB, perform a physical layer operation based on the first SSB, where the first SSB includes a non-cell defining SSB; where
the physical layer operation includes at least one of the following:
determining energy per resource element EPRE of a downlink channel state information reference signal CSI-RS;
determining a related operation for a physical downlink control channel PDCCH candidate resource;
changing, by using a dynamic slot format indicator SFI, a transmission direction corresponding to a flexible slot;
determining a valid physical random access channel PRACH occasion or physical uplink shared channel PUSCH occasion;
scheduling a repetition through a random access response uplink grant RAR UL grant or first downlink control information DCI, where the first DCI is DCI scrambled by a temporary cell radio network temporary identifier TC-RNTI;
determining correspondences between hybrid automatic repeat request HARQ process numbers and multiple scheduled PUSCH transmissions;
determining a first condition for triggering a delayed semi-persistent scheduling hybrid automatic repeat request acknowledgement SPS HARQ-ACK transmission in a first slot;
determining a second condition for delaying an SPS HARQ-ACK transmission to a second slot; and
evaluating radio link quality or link recovery quality in each indication period.

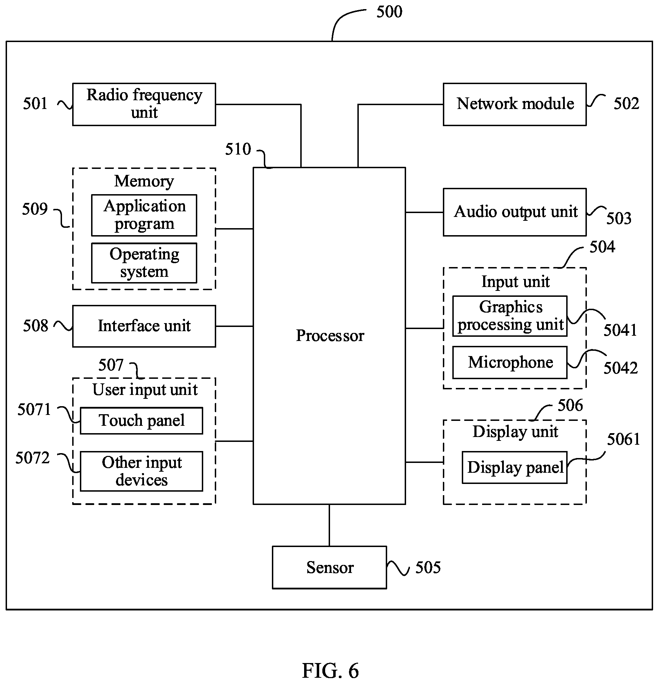

This terminal embodiment corresponds to the foregoing method embodiment on the terminal side. All processes and implementations in the foregoing method embodiment are applicable to this terminal embodiment, with the same technical effect achieved. Specifically, FIG. 6 is a schematic diagram of a hardware structure of a terminal implementing the embodiments of this application.

The terminal 500 includes but is not limited to at least part of these components: a radio frequency unit 501, a network module 502, an audio output unit 503, an input unit 504, a sensor 505, a display unit 506, a user input unit 507, an interface unit 508, a memory 509, a processor 510, and the like.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 6 does not constitute any limitation on the terminal, and the terminal may include more or fewer components than shown in the figure, or combine some of the components, or have different arrangements of the components. Details are not described herein.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (for example, a camera) in a video capture mode or an image capture mode. The display unit 506 may include a display panel 5061, and the display panel 5061 may be configured in a form of a liquid crystal display, an organic light-emitting diode, and the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (for example, a volume control key or a power on/off key), a trackball, a mouse, a joystick, and the like. Details are not described herein.

In an embodiment of this application, the radio frequency unit 501 receives downlink data from a network-side device and sends the data to the processor 510 for processing; and the radio frequency unit 501 can additionally send uplink data to the network-side device. Generally, the radio frequency unit 501 includes but is not limited to an antenna, an amplifier, a transceiver, a coupler, a low noise amplifier, and a duplexer.

The memory 509 may be configured to store software programs or instructions and various data. The memory 509 may include a first storage are for storing programs or instructions and a second storage area for storing data. The first storage area may store an operating system, an application program or instructions required by at least one function (for example, a sound playback function or an image playback function), and the like. Additionally, the memory 509 may be a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 509 in the embodiments of this application includes but is not be limited to these or any other applicable types of memories.

The processor 510 may include one or more processing units. Optionally, the processor 510 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 510.

The processor 510 is configured to: in a case that a first downlink bandwidth part BWP includes a first synchronization signal/physical broadcast channel signal block SSB, perform a physical layer operation based on the first SSB, where the first SSB includes a non-cell defining SSB; where
the physical layer operation includes at least one of the following:
determining energy per resource element EPRE of a downlink channel state information reference signal CSI-RS;
determining a related operation for a physical downlink control channel PDCCH candidate resource;
changing, by using a dynamic slot format indicator SFI, a transmission direction corresponding to a flexible slot;
determining a valid physical random access channel PRACH occasion or physical uplink shared channel PUSCH occasion;
scheduling a repetition through a random access response uplink grant RAR UL grant or first downlink control information DCI, where the first DCI is DCI scrambled by a temporary cell radio network temporary identifier TC-RNTI;
determining correspondences between hybrid automatic repeat request HARQ process numbers and multiple scheduled PUSCH transmissions;
determining a first condition for triggering a delayed semi-persistent scheduling hybrid automatic repeat request acknowledgement SPS HARQ-ACK transmission in a first slot;
determining a second condition for delaying an SPS HARQ-ACK transmission to a second slot; and
evaluating radio link quality or link recovery quality in each indication period.

Optionally, the processor 510 is further configured to determine the EPRE based on a power offset parameter of the CSI-RS relative to a target first SSB and a synchronization signal-PBCH block power configured by a higher layer.

Optionally, the target first SSB includes one of the following:
first SSB contained in the first BWP;
first SSB configured or specified by a network; and
first SSB having a same target parameter as a second SSB; where
the target parameter includes at least one of synchronization signal-PBCH block power and a physical cell identifier PCI, and the second SSB includes a cell defining SSB.

Optionally, the processor 510 is further configured to perform, by the terminal, a first operation in a case that a resource element corresponding to the PDCCH candidate resource overlaps with a resource element corresponding to the first SSB, where the first operation includes at least one of the following:
skipping monitoring the PDCCH candidate resource;
monitoring the PDCCH candidate resource or not receiving the first SSB; and
determining a network configuration or scheduling error.

Optionally, the processor 510 is further configured to: in a case that second DCI with a first SFI index field value is detected, drop, by the terminal, reception of the first SSB, or receive the first SSB, or determine behavior of the terminal based on terminal implementation; or
determine that the terminal does not expect to detect second DCI with a first SFI index field value; where
the first SFI index field value indicates that a transmission direction corresponding to a first symbol is an uplink transmission direction, and the first symbol is at least one of a symbol corresponding to the first SSB.

Optionally, the processor 510 is further configured to determine, as a valid first occasion, a first occasion that is located after a third SSB and/or a fourth SSB and whose interval between the fourth SSB is greater than a first interval, where the first occasion includes at least one of PRACH occasion and PUSCH occasion; where
the third SSB is one first SSB in a slot in which a PRACH or PUSCH is located or a first SSB configured or specified by a network, and the fourth SSB is the first SSB or the fourth SSB is a first SSB configured or specified by a network;
the third SSB is a second SSB in a slot in which a PRACH or PUSCH is located, and the fourth SSB is the first SSB or the fourth SSB is a first SSB configured or specified by a network; or
the third SSB is one first SSB in a slot in which a PRACH or PUSCH is located or a first SSB configured or specified by a network, and the fourth SSB is a second SSB; and
the second SSB is a cell defining SSB.

Optionally, the processor 510 is further configured to perform a second operation, where the second operation includes at least one of the following:
in a case that an uplink BWP associated with the first downlink BWP is configured with target information or the terminal is in a connected state, determining that the third SSB is the first SSB in the slot in which the PRACH or PUSCH is located and/or determining that the fourth SSB is the first SSB; and
in a case that the terminal is in a connected state, determining that at least one of the third SSB and the fourth SSB is the first SSB configured or specified by the network; where
the target information includes at least one of the following:
   dedicated random access channel configuration information;
   common random access channel configuration information;
   beam failure recovery configuration information; and
   physical uplink shared channel configuration information related to two-step random access.

Optionally, the processor 510 is further configured to perform, by the terminal, a third operation in a case that a resource corresponding to the N-th repetition overlaps with a resource corresponding to the first SSB, where N is a positive integer, and the third operation includes one of the following:
delaying the N-th repetition;
dropping the N-th repetition;
transmitting the N-th repetition; and
determining a network configuration error or network scheduling error; where
the repetition includes a PUSCH repetition or a PUCCH repetition.

Optionally, the processor 510 is further configured to: in a case that the terminal is scheduled with the multiple PUSCH transmissions by third DCI, a HARQ process number indicated by the third DCI corresponds to the 1st PUSCH transmission that does not overlap with a second symbol, where the second symbol includes at least one of the following:
downlink symbol indicated by a time division duplexing uplink-downlink common configuration or a time division duplexing uplink-downlink dedicated configuration; and
symbol corresponding to the first SSB.

Optionally, the processor 510 is further configured to determine process numbers of subsequent PUDCH transmissions based on a scheduling order of the subsequent PUSCH transmissions after the 1st PUSCH transmission and a HARQ process number of the 1st PUSCH.

Optionally, the processor 510 is further configured to: in a case that a symbol corresponding to the subsequent PUSCH transmission does not overlap with the second symbol, determine the process numbers of the subsequent PUDCH transmissions based on the scheduling order of the subsequent PUSCH transmissions and the HARQ process number of the 1st PUSCH.

Optionally, the first condition includes:
a PUCCH transmitting an SPS HARQ-ACK in the first slot is indicated by a first parameter, and a symbol corresponding to the PUCCH overlaps with a symbol corresponding to the first SSB; where
the first parameter includes at least one of SPS-PUCCH-AN-List and n1PUCCH-AN.

Optionally, the second condition includes:
a symbol in the second slot that is indicated by a first parameter and that is corresponding to a PUCCH carrying a delayed SPS HARQ-ACK does not overlap with a symbol corresponding to the first SSB; where
the first parameter includes at least one of SPS-PUCCH-AN-List and n1PUCCH-AN.

Optionally, the indication period is a maximum value between a shortest period of the first SSB and a preset duration.

Optionally, the non-cell defining SSB includes at least one of the following:
SSB configured by terminal-specific signaling;
SSB configured by BWP downlink dedicated signaling;
SSB configured by a radio resource control RRC parameter related to a non-cell defining SSB configuration; and
SSB not used to obtain a system information block SIB1 of a current serving cell or an SSB not used to obtain an SIB1 corresponding to a PDCCH configuration of a current serving cell.

In this embodiment of this application, in a case that the first downlink bandwidth part BWP includes the first SSB, the terminal performs the physical layer operation based on the first SSB, where the first SSB includes the non-cell defining SSB. The physical layer operation includes at least one of the following: determining the EPRE of the downlink CSI-RS; determining the related operation for the PDCCH candidate resource; changing, by using the SFI, the transmission direction corresponding to the flexible slot; determining the valid PRACH occasion; scheduling the repetition through the RAR UL grant or first DCI; determining the correspondences between the HARQ process numbers and the multiple scheduled PUSCH transmissions; determining the first condition for triggering the delayed SPS HARQ-ACK transmission in the first slot; determining the second condition for delaying the SPS HARQ-ACK transmission to the second slot; and evaluating radio link quality or link recovery quality in each indication period. In this embodiment of this application, it is specified that the above physical layer behavior is completed based on the first SSB containing the non-cell defining SSB, thereby enabling a network side to correspondingly configure the first SSB based on the physical layer behavior.

An embodiment of this application further provides a readable storage medium. The readable storage medium stores a program or an instruction. When the program or instruction is executed by a processor, the processes of the foregoing embodiments of the method for processing a physical layer operation are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or an instruction to implement the processes of the foregoing embodiments of the method for processing a physical layer operation, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiments of the method for processing a physical layer operation, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for processing a physical layer operation, comprising:
in a case that a first downlink bandwidth part BWP comprises a first synchronization signal/physical broadcast channel signal block SSB, performing, by a terminal, a physical layer operation based on the first SSB, wherein the first SSB comprises a non-cell defining SSB; wherein
the physical layer operation comprises at least one of the following:
determining energy per resource element EPRE of a downlink channel state information reference signal CSI-RS;
determining a related operation for a physical downlink control channel PDCCH candidate resource;
changing, by using a dynamic slot format indicator SFI, a transmission direction corresponding to a flexible slot;
determining a valid physical random access channel PRACH occasion or physical uplink shared channel PUSCH occasion;
scheduling a repetition through a random access response uplink grant RAR UL grant or first downlink control information DCI, wherein the first DCI is DCI scrambled by a temporary cell radio network temporary identifier TC-RNTI;
determining correspondences between hybrid automatic repeat request HARQ process numbers and multiple scheduled PUSCH transmissions;
determining a first condition for triggering a delayed semi-persistent scheduling hybrid automatic repeat request acknowledgement SPS HARQ-ACK transmission in a first slot;
determining a second condition for delaying an SPS HARQ-ACK transmission to a second slot; and
evaluating radio link quality or link recovery quality in each indication period.

2. The method according to claim 1, wherein the determining, by a terminal, energy per resource element EPRE of a downlink CSI-RS based on a first SSB comprises:
determining the EPRE based on a power offset parameter of the CSI-RS relative to a target first SSB and a synchronization signal-PBCH block power configured by a higher layer.

3. The method according to claim 2, wherein the target first SSB comprises one of the following:
first SSB contained in the first BWP;
first SSB configured or specified by a network; and
first SSB having a same target parameter as a second SSB; wherein
the target parameter comprises at least one of synchronization signal-PBCH block power and a physical cell identifier PCI, and the second SSB comprises a cell defining SSB.

4. The method according to claim 1, wherein the determining, by a terminal, a related operation for a PDCCH candidate resource based on a first SSB comprises:
performing, by the terminal, a first operation in a case that a resource element corresponding to the PDCCH candidate resource overlaps with a resource element corresponding to the first SSB, wherein the first operation comprises at least one of the following:
skipping monitoring the PDCCH candidate resource;
monitoring the PDCCH candidate resource or not receiving the first SSB; and
determining a network configuration or scheduling error.

5. The method according to claim 1, wherein the changing, by a terminal based on a first SSB by using a dynamic slot format indicator SFI, a transmission direction corresponding to a flexible slot comprises:
in a case that second DCI with a first SFI index field value is detected, dropping, by the terminal, reception of the first SSB, or receiving the first SSB, or determining behavior of the terminal based on terminal implementation; or
determining that the terminal does not expect to detect second DCI with a first SFI index field value; wherein
the first SFI index field value indicates that a transmission direction corresponding to a first symbol is an uplink transmission direction, and the first symbol is at least one of a symbol corresponding to the first SSB.

6. The method according to claim 1, wherein the determining, by a terminal based on a first SSB, a valid PRACH occasion or physical uplink shared channel PUSCH occasion comprises:
determining, as a valid first occasion, a first occasion that is located after a third SSB and/or a fourth SSB and whose interval between the fourth SSB is greater than a first interval, wherein the first occasion comprises at least one of PRACH occasion and PUSCH occasion; wherein
the third SSB is one first SSB in a slot in which a PRACH or PUSCH is located or a first SSB configured or specified by a network, and the fourth SSB is the first SSB or the fourth SSB is a first SSB configured or specified by a network;
the third SSB is a second SSB in a slot in which a PRACH or PUSCH is located, and the fourth SSB is the first SSB or the fourth SSB is a first SSB configured or specified by a network; or
the third SSB is one first SSB in a slot in which a PRACH or PUSCH is located or a first SSB configured or specified by a network, and the fourth SSB is a second SSB; and
the second SSB is a cell defining SSB.

7. The method according to claim 6, further comprising:
performing, by the terminal, a second operation, wherein the second operation comprises at least one of the following:
in a case that an uplink BWP associated with the first downlink BWP is configured with target information or the terminal is in a connected state, determining that the third SSB is the first SSB in the slot in which the PRACH or PUSCH is located and/or determining that the fourth SSB is the first SSB;
in a case that the terminal is in a connected state, determining that at least one of the third SSB and the fourth SSB is the first SSB configured or specified by the network; wherein
the target information comprises at least one of the following:
dedicated random access channel configuration information;
common random access channel configuration information;
beam failure recovery configuration information; and
physical uplink shared channel configuration information related to two-step random access.

8. The method according to claim 1, wherein the scheduling, by a terminal based on a first SSB, a repetition through a random access response uplink grant RAR UL grant or first downlink control information DCI comprises:
performing, by the terminal, a third operation in a case that a resource corresponding to the N-th repetition overlaps with a resource corresponding to the first SSB, wherein N is a positive integer, and the third operation comprises one of the following:
delaying the N-th repetition;
dropping the N-th repetition;
transmitting the N-th repetition; and
determining a network configuration error or network scheduling error; wherein
the repetition comprises a PUSCH repetition or a PUCCH repetition.

9. The method according to claim 1, wherein the determining, by a terminal based on a first SSB, correspondences between HARQ process numbers and multiple scheduled PUSCH transmissions comprises:
in a case that the terminal is scheduled with the multiple PUSCH transmissions by third DCI, a HARQ process number indicated by the third DCI corresponding to the 1 st PUSCH transmission that does not overlap with a second symbol, wherein the second symbol comprises at least one of the following:
downlink symbol indicated by a time division duplexing uplink-downlink common configuration or a time division duplexing uplink-downlink dedicated configuration; and
symbol corresponding to the first SSB.

10. The method according to claim 9, further comprising:
determining process numbers of subsequent PUDCH transmissions based on a scheduling order of the subsequent PUSCH transmissions after the 1st PUSCH transmission and a HARQ process number of the 1st PUSCH.

11. The method according to claim 10, wherein the determining process numbers of subsequent PUDCH transmissions based on a scheduling order of the subsequent PUSCH transmissions after the 1st PUSCH transmission and a HARQ process number of the 1st PUSCH comprises:
in a case that a symbol corresponding to the subsequent PUSCH transmission does not overlap with the second symbol, determining the process numbers of the subsequent PUDCH transmissions based on the scheduling order of the subsequent PUSCH transmissions and the HARQ process number of the 1st PUSCH.

12. The method according to claim 1, wherein the first condition comprises:
a PUCCH transmitting an SPS HARQ-ACK in the first slot is indicated by a first parameter, and a symbol corresponding to the PUCCH overlaps with a symbol corresponding to the first SSB; wherein
the first parameter comprises at least one of a PUCCH resource list for semi-persistent scheduling HARQ feedback and a PUCCH resource for semi-persistent scheduling HARQ feedback.

13. The method according to claim 1, wherein the second condition comprises:
a symbol in the second slot that is indicated by a first parameter and that is corresponding to a PUCCH carrying a delayed SPS HARQ-ACK does not overlap with a symbol corresponding to the first SSB; wherein
the first parameter comprises at least one of a PUCCH resource list for semi-persistent scheduling HARQ feedback and a PUCCH resource for semi-persistent scheduling HARQ feedback.

14. The method according to claim 1, wherein the indication period is a maximum value between a shortest period of the first SSB and a preset duration.

15. The method according to claim 1, wherein the non-cell defining SSB comprises at least one of the following:
SSB configured by terminal-specific signaling;
SSB configured by BWP downlink dedicated signaling;
SSB configured by a radio resource control RRC parameter related to a non-cell defining SSB configuration; and
SSB not used to obtain a system information block SIB1 of a current serving cell or an SSB not used to obtain an SIB1 corresponding to a PDCCH configuration of a current serving cell.

16. An apparatus for processing a physical layer operation, comprising:
a first processing module, configured to: in a case that a first downlink bandwidth part BWP comprises a first synchronization signal/physical broadcast channel signal block SSB, perform a physical layer operation based on the first SSB, wherein the first SSB comprises a non-cell defining SSB; wherein
the physical layer operation comprises at least one of the following:
determining energy per resource element EPRE of a downlink channel state information reference signal CSI-RS;
determining a related operation for a physical downlink control channel PDCCH candidate resource;
changing, by using a dynamic slot format indicator SFI, a transmission direction corresponding to a flexible slot;
determining a valid physical random access channel PRACH occasion or physical uplink shared channel PUSCH occasion;
scheduling a repetition through a random access response uplink grant RAR UL grant or first downlink control information DCI, wherein the first DCI is DCI scrambled by a temporary cell radio network temporary identifier TC-RNTI;
determining correspondences between hybrid automatic repeat request HARQ process numbers and multiple scheduled PUSCH transmissions;
determining a first condition for triggering a delayed semi-persistent scheduling hybrid automatic repeat request acknowledgement SPS HARQ-ACK transmission in a first slot;
determining a second condition for delaying an SPS HARQ-ACK transmission to a second slot; and
evaluating radio link quality or link recovery quality in each indication period.

17. The apparatus according to claim 16, wherein the first processing module is configured to determine the EPRE based on a power offset parameter of the CSI-RS relative to a target first SSB and a synchronization signal-PBCH block power configured by a higher layer.

18. The apparatus according to claim 17, wherein the target first SSB comprises one of the following:
first SSB contained in the first BWP;
first SSB configured or specified by a network; and
first SSB having a same target parameter as a second SSB; wherein
the target parameter comprises at least one of synchronization signal-PBCH block power and a physical cell identifier PCI, and the second SSB comprises a cell defining SSB.

19. The apparatus according to claim 16, wherein the first processing module is configured to perform a first operation in a case that a resource element corresponding to the PDCCH candidate resource overlaps with a resource element corresponding to the first SSB, wherein the first operation comprises at least one of the following:
skipping monitoring the PDCCH candidate resource;
monitoring the PDCCH candidate resource or not receiving the first SSB; and
determining a network configuration or scheduling error.

20. The apparatus according to claim 16, wherein the first processing module is configured to:
in a case that second DCI with a first SFI index field value is detected, drop reception of the first SSB, or receive the first SSB, or determine behavior of the terminal based on terminal implementation; or
determine that the terminal does not expect to detect second DCI with a first SFI index field value; wherein
the first SFI index field value indicates that a transmission direction corresponding to a first symbol is an uplink transmission direction, and the first symbol is at least one of a symbol corresponding to the first SSB.

21. The apparatus according to claim 16, wherein the first processing module is configured to:
determine, as a valid first occasion, a first occasion that is located after a third SSB and/or a fourth SSB and whose interval between the fourth SSB is greater than a first interval, wherein the first occasion comprises at least one of PRACH occasion and PUSCH occasion; wherein
the third SSB is one first SSB in a slot in which a PRACH or PUSCH is located or a first SSB configured or specified by a network, and the fourth SSB is the first SSB or the fourth SSB is a first SSB configured or specified by a network;
the third SSB is a second SSB in a slot in which a PRACH or PUSCH is located, and the fourth SSB is the first SSB or the fourth SSB is a first SSB configured or specified by a network; or
the third SSB is one first SSB in a slot in which a PRACH or PUSCH is located or a first SSB configured or specified by a network, and the fourth SSB is a second SSB; and
the second SSB is a cell defining SSB.

22. The apparatus according to claim 21, wherein the first processing module is further configured to perform a second operation, wherein the second operation comprises at least one of the following:
in a case that an uplink BWP associated with the first downlink BWP is configured with target information or the terminal is in a connected state, determining that the third SSB is the first SSB in the slot in which the PRACH or PUSCH is located and/or determining that the fourth SSB is the first SSB;
in a case that the terminal is in a connected state, determining that at least one of the third SSB and the fourth SSB is the first SSB configured or specified by the network; wherein
the target information comprises at least one of the following:
dedicated random access channel configuration information;
common random access channel configuration information;
beam failure recovery configuration information; and
physical uplink shared channel configuration information related to two-step random access.

23. The apparatus according to claim 16, wherein the first processing module is configured to perform a third operation in a case that a resource corresponding to the N-th repetition overlaps with a resource corresponding to the first SSB, wherein N is a positive integer, and the third operation comprises one of the following:
delaying the N-th repetition;
dropping the N-th repetition;
transmitting the N-th repetition; and
determining a network configuration error or network scheduling error; wherein
the repetition comprises a PUSCH repetition or a PUCCH repetition.

24. The apparatus according to claim 16, wherein the first processing module is configured to: in a case that the terminal is scheduled with the multiple PUSCH transmissions by third DCI, a HARQ process number indicated by the third DCI corresponds to the 1 st PUSCH transmission that does not overlap with a second symbol, wherein the second symbol comprises at least one of the following:
downlink symbol indicated by a time division duplexing uplink-downlink common configuration or a time division duplexing uplink-downlink dedicated configuration; and
symbol corresponding to the first SSB.

25. The apparatus according to claim 24, further comprising:
a second processing module configured to: determine process numbers of subsequent PUDCH transmissions based on a scheduling order of the subsequent PUSCH transmissions after the 1st PUSCH transmission and a HARQ process number of the 1st PUSCH.

26. The apparatus according to claim 25, wherein the first processing module is configured to: in a case that a symbol corresponding to the subsequent PUSCH transmission does not overlap with the second symbol, determine the process numbers of the subsequent PUDCHs transmission based on the scheduling order of the subsequent PUSCH transmissions and the HARQ process number of the 1st PUSCH.

27. The apparatus according to claim 16, wherein the first condition comprises:
a PUCCH transmitting an SPS HARQ-ACK in the first slot is indicated by a first parameter, and a symbol corresponding to the PUCCH overlaps with a symbol corresponding to the first SSB; wherein
the first parameter comprises at least one of a PUCCH resource list for semi-persistent scheduling HARQ feedback and a PUCCH resource for semi-persistent scheduling HARQ feedback.

28. The apparatus according to claim 16, wherein the second condition comprises:
a symbol in the second slot that is indicated by a first parameter and that is corresponding to a PUCCH carrying a delayed SPS HARQ-ACK does not overlap with a symbol corresponding to the first SSB; wherein
the first parameter comprises at least one of a PUCCH resource list for semi-persistent scheduling HARQ feedback and a PUCCH resource for semi-persistent scheduling HARQ feedback.

29. The apparatus according to claim 16, wherein the indication period is a maximum value between a shortest period of the first SSB and a preset duration.

30. The apparatus according to claim 16, wherein the non-cell defining SSB comprises at least one of the following:
SSB configured by terminal-specific signaling;
SSB configured by BWP downlink dedicated signaling;
SSB configured by a radio resource control RRC parameter related to a non-cell defining SSB configuration; and
SSB not used to obtain a system information block SIB1 of a current serving cell or an SSB not used to obtain an SIB1 corresponding to a PDCCH configuration of a current serving cell.

31. A terminal, comprising a processor and a memory, wherein the memory stores a program or an instruction capable of running on the processor, and when the program or instruction is executed by the processor, the steps of the method for processing a physical layer operation according to any one of claims 1 to 15 are implemented.

32. A readable storage medium, wherein the readable storage medium stores a program or an instruction, and when the program or instruction is executed by a processor, the steps of the method for processing a physical layer operation according to any one of claims 1 to 15 are implemented.
